# EUROPÄISCHE PATENTSCHRIFT

(11) **EP 0 840 074 B1**
(45) Veröffentlichungstag und Bekanntmachung des Hinweises auf die Patenterteilung: **14.05.2003**
(21) Anmeldenummer: 97118777.8
(22) Anmeldetag: 29.10.1997
(51) Int. Cl.: F24J 2/04, F24D 3/18

(54) **Bauwerk aus Betonfertigteilen**
Structure consisting of prefabricated components
Structure constituée d'éléments préfabriqués

(30) Priorität: 04.11.1996 CH 271396; 07.12.1996 DE 29621232 U; 19.12.1996 DE 29622090 U
(43) Veröffentlichungstag der Anmeldung: 06.05.1998
(73) Patentinhaber: Betonbau GmbH, D-68753 Waghäusel (DE)
(72) Erfinder: Primus, Illo-Frank, Dr., 76327 Pfinztal (DE); Kaute, Christoph, Dipl.-Ing., 76344 Leopoldshafen (DE); Jastrow, Roy, Dr.-Ing., 67482 Altdorf (DE); Stüssi, Rudolf, Jun., 8106 Dällikon (CH)
(74) Vertreter: Hiebsch, Gerhard F., Dipl.-Ing.

(56) Entgegenhaltungen:
- EP-A- 0 442 432
- DE-A- 3 604 076

## Beschreibung

Die Erfindung betrifft ein Bauwerk aus mehreren gesonderten, jeweils Rohrschlange/n -- für ein Strömungsmittel als Energieträger -- enthaltenden plattenförmigen Betonfertigteilen, die radial an einer Mittelachse zu einer säulenartigen Konstruktion zusammengesetzt sind und zumindest teilweise in Abstand zueinander verlaufen.

Wärmepumpenanlagen mit vertikal oder horizontal im Erdreich verlegten Rohrsysteme als Wärmequelle sind ebenso bekannt wie Luftwärmepumpen und Massivabsorbersysteme. Horizontal im Erdreich verlegte Rohrsysteme nutzen die durch die Solarstrahlung in die oberen Bodenschichten eingebrachte Energie; die dafür notwendige Bodenfläche steht heute nur selten zur Verfügung. Vertikal im Erdreich verlegte Rohrsysteme, sog. Erdsonden, nutzen das in tieferen Bodenschichten höhere Temperaturniveau aus und sind universell einsetzbar.

Luftwärmepumpen werden bei kleineren Anlagen am häufigsten eingesetzt. Sie sind als Direktverdampfungssysteme konzipiert. Die Wärmegewinnung erfolgt durch in einen Luftstrom eingesetzte Rohrbündel. Letztere können vereisen und müssen dann mit Energieeinsatz abgetaut werden, was die Jahresarbeitszahl der Anlage reduziert. Wird Außenluft verwendet, so ist deren Temperaturniveau bei kalten Wintertagen ungünstig und der Wirkungsgrad der Anlage vergleichsweise schlecht. In den Übergangszeiten mit Außentemperaturen über 10°C ist das Temperaturniveau günstig.

Massivabsorbersysteme als in Außenwänden von Hochbauten integrierte Rohrschlangensysteme für Energieträgerflüssigkeit zu einer Wärmepumpe sind zur Wärmeenergiegewinnung bekannt und haben sich als ein wirtschaftlicher Weg zur Gewinnung von Heizenergie bewährt; sie sammeln, speichern und spenden Wärme. Auch sind solche Massivabsorbersysteme umweltfreundlich, da sie keine Abgasemmission verursachen.

Damit die Flüssigkeiten bei tiefen Außentemperaturen nicht einfriert, und in Perioden mit sehr tiefen Außentemperaturen das Temperaturniveau gehoben wird, sind erdverlegte Anteile notwendig bzw. ein zusätzlicher ins Erdreich eingelassener Absorber. Bei Tieftemperaturen wird damit dem Erdreich ein hoher Energieanteil entnommen, der bei wärmeren Tagen durch die Sonneneinstrahlung auf den Boden oder durch den Flüssigkeitskreislauf des Massivabsorbersystems wieder eingebracht wird. Auch von Massivabsorbersystemen bekannt ist die hohe Absorbierungsfähigkeit von Umweltenergie durch den Beton: die direkte und indirekte Solarstrahlung wird von der Sonne zugeneigten Betonelementen in sehr vorteilhaftem Umfang absorbiert, und erzeugt ein für die Leistungsfähigkeit vorteilhaftes, signifikant höheres Temperaturniveau. Daß Beton über eine gute Speicherwirkung verfügt, bringt erhebliche wirtschaftliche Vorteile. Das Energieangebot für einen Absorber ist am Tage am besten, da dann die direkte und indirekte Solareinstrahlung genutzt werden kann, und die Lufttemperatur -- damit auch die anliegende Temperaturdifferenz -- am höchsten ist.

Die DE-A-31 03 877 offenbart eine Garage aus einer vorgefertigten Betonraumzelle mit vier Außenwänden, einer Bodenplatte und einer vorzugsweise separat aufsetzbaren Dachplatte, deren Außenwände mit derartigen Absorbersystemen ausgerüstet sind; mit auf diese Weise gesammelter Wärmeenergie können benachbarte Häuser beheizt werden. Die Außenwände und das Dach eignen sich aber nicht für die Speicherung der gesammelten Wärmeenergie, da im Tagesmittel die Wärmeabstrahlung dieser Flächen genauso groß ist wie die Wärmeeinstrahlung. Ohne eine zwischenzeitliche Wärmespeicherung läßt sich aber eine derartige Beheizung von Gebäuden -- zumindest im monovalenten Betrieb -- nicht wirtschaftlich durchführen.

Durch die EP 0 209 833 wurde für solche Energiegaragen vorgeschlagen, eine ins Erdreich eingesetzte Bodenplatte und mindestens eine der Außenwände der Raumzelle auch unterirdisch mit Absorberrohren für die Energieträgerflüssigkeit auszustatten.

Zumeist aber stehen weder am Gebäude eine Fläche für Massivabsorbervorsatzschalen noch die Bodenplatte als Massivspeicher zur Verfügung, sei es, daß die Fassaden, die Mauern oder die Garagen bereits konventionell ausgeführt wurden und abgerissen werden müßten, oder sei es, daß die Anbringung aus anderen Gründen verhindert ist.

In ihrer DE-A-40 04 666 hat die Anmelderin ein Bauwerk aus mehreren Platten beschrieben, welches die vorstehenden Nachteile beseitigt; das Bauwerk wird mit die Wärmeschlange weiterführenden Sockelteilen seiner Platten in das Erdreich eingelassen, was zu erheblichen Installationsarbeiten vor Ort führt.

In Kenntnis dieses Standes der Technik hat sich der Erfinder die Aufgabe gestellt, ein Bauwerk der eingangs genannten Art zu verbessern, den Einsatzbereich zu erweitern sowie die Kosten- und die Energieeffizienz zu erhöhen.

Zur Lösung dieser Aufgabe führt die Lehre des unabhängigen Patentanspruches, die Unteransprüche geben günstige Weiterbildungen an.

Die Platten bilden erfindungsgemäß miteinander eine transportable Fertigeinheit. Sie sind bevorzugt auf einem Sockelelement festgelegt, mit dem sie jene Transporteinheit darstellen und werden mit diesem Sockelelement auf einen Baugrund gestellt; die Absorberkreisläufe des Bauwerks verlaufen oberirdisch und können ohne weiteres mit einem Verbraucher verbunden werden.

Als günstig hat es sich erwiesen, die bevorzugt doppellagig und an beiden Oberflächen der jeweiligen Platte vorgesehenen Rohrschlangen innerhalb des Sockelelements an einen Verteiler anzuschließen, der seinerseits mit einer Wärmepumpe in Verbindung steht. Diese kann nach einem weiteren Merkmal der Erfindung unmittelbar auf das Sockelelement montiert und werkseitig in die Rohrsysteme des Bauwerkes integriert sein. Jedoch ist es auch denkbar, die Wärmepumpe in gewissem Abstand zum Bauwerk aufzustellen, wobei allerdings auch hierbei die Zu- und Ableitungen werksseitig an die Rohrsysteme des Bauwerks angeschlossen sind.

Die Wärmepumpe wird an die Warmwasserseite eines Abnehmers -- also beispielsweise einer Heizungsanlage -- angeschlossen.

Eine Besonderheit ergibt sich durch die Möglichkeit, die zwischen Bauwerk und Wärmepumpe verlaufenden Leitungen mit zumindest einer Absorbermatte im Erdreich in Reihe zu verlegen, die werkseitig in das Rohrsystem integriert worden ist. Diese Absorbermatte hat sich -- wie auch der Sockelteil des Bauwerks nach DE-OS 40 04 666 -- in kalten Tagen als äußerst günstig herausgestellt.

Die Hinzunahme von Erdabsorbern kann in Reihe oder parallel erfolgen.

Um den Transport des Bauwerks zu vereinfachen, werden vor diesem dessen Solekreise mit Sole gefüllt und zudem die Soleumwälzpumpe/n sowie die Soleausdehnungsgefäße montiert; da auch alle Verbindungen der Wärmepumpe im Werk vorgerichtet werden, bedarf es am Aufstellort eines Wärmepumpenfachmannes nicht mehr - der Anschluß an die übliche Regelanlage des zu heizenden Gebäudes erfolgt durch einen Elektroinstallateur. Der kein Spezialwissen erfordernde Warmwasseranschluß geschieht durch einen Heizungsmonteur.

Bei einer weiteren Ausführung wird der beschriebenen Bauwerkseinheit eine Heizungseinrichtung hinzugefügt, um extreme Klimazustände überbrücken zu können. Dabei kann es sich zum bivalenten Betrieb um eine Flüssiggasheizung -- insbesondere eine Propangasheizung -- oder -- zum monoenergetischen Betrieb -- um elektrische Heizstäbe handeln.

Für monovalenten Betrieb können auch zusätzliche Erdkollektoren eingesetzt werden, die einem Drei-Wege-Ventil nachgeordnet sind. Sie sollen bevorzugt im Wechsel mit den erwähnten oberirdischen Absorberkreisläufen betrieben werden.

Die beschriebene Bauwerkseinrichtung kann zudem monoenergetisch mit einer erdgasbetriebenen Gasabsorptionswärmepumpe samt integriertem Gaskessel betrieben werden.

Im Rahmen der Erfindung liegt es auch, daß die Absorberkreisläufe zur Direktverdampfung ausgebildet sind. Dabei wird in den erwähnten oberirdischen Absorberkreisläufen das Kältemittel der Wärmepumpe -- direkt -- durch absorbierte Umweltenergie verdampft. Der sonst erforderliche Wärmetausch über eine Soleflüssigkeit entfällt.

Vorteilhafterweise wird der Betonabsorber direkt von einem in der Wärmepumpe und deren Kompressionsmaschine vorhandenen Gasgemisch durchströmt.

Die Betriebssicherheit wird durch die Anordnung der vom Gasgemisch durchströmten Rohrschlangen, der Materialwahl der Rohrschlangen und die Anordnung des Einspritzventils bestimmt. Die Rohrschlangen werden in hochwertigen, dichten und frostsicheren Beton eingegossen; sie müssen von einer Qualität sein, die langfristig gegen das im Wärmepumpenkreislauf zirkulierende Gasgemisch und gegenüber Beton beständig ist. Es kommen ummantelte Kupferrohre -- Wandaufbau z.B. circa 1 mm betonbeständiger Kunststoff außen und 1 bis 2 mm gasgemischbeständige Kupferlegierung innen -- oder innen metallbeschichtete Kunststoffrohre infrage. Die Anordnung der Rohrschlangen soll bei den vertikal gestellten Bauteilen so sein, daß das Gas ohne Zwischenüberhöhungen von oben nach unten fließt. Damit ergeben sich keine Probleme mit dem im Gasgemisch eventuell enthaltenen Öl, das sich vor Zwischenüberhöhungen gerne in konzentrierter Form ansammelt und dann zu Problemen im Betrieb führt. Muß das erforderliche Einspritzventil aus konstruktiven Gründen unten am Bauteil angeordnet werden, so soll eine einmalige, geradlinige Steigstrecke zur höchstgelegenen Stelle des Rohrsystems führen, von dem dann die Rohrleitung wiederum mäanderförmig nach unten abfallen soll. Die Höhe des Bauteils wird durch die maximal mögliche Steighöhe zwischen zwei Einspritzpunkten festgelegt. Dabei haben sich 3 bis 6 m als gut praktikabel erwiesen.

Bekanntlich verfügt Beton über eine gute Wärmeleitfähigkeit -- z.B. signifikant besser als Luft, mindestens so gut wie Wasser --, so daß die in Beton eingebetteten Rohrschlangen an ihrer Oberfläche eine sehr gleichmäßige Temperaturverteilung haben. Die Temperaturerhöhung/Wärmeaufnahme des Gasgemisches ist daher ebenfalls gleichmäßig. Bis zum Kompressoreintritt muß die in das Rohrsystem eingespritzte Flüssigkeit vollkommen verdampft sein, andernfalls der Kompressor der Wärmepumpe mechanisch unzulässig belastet wird. Um ganz sicher zu sein, daß alle Flüssigkeit voll verdampft ist, wird sicherheitshalber weniger Flüssigkeit eingespritzt, als unter optimalen Bedingungen möglich wäre. Dank der Einbettung in Beton kann die Leistung erhöht, d.h. ein geringerer Sicherheitsabstand gewählt werden. Die Leistungskonstanz und Betriebssicherheit der Anlage wird dank der Einbettung in Beton verbessert.

Wenn das durch die Drosseleinrichtung im Wärmepumpenkreislauf stark abgekühlte Gasgemisch den Betonabsorber durchströmt, nimmt das Gasgemisch Energie auf, deren Menge direkt vom Temperaturniveau des Betonabsorbers -- bzw. von der Temperaturdifferenz zwischen Betonabsorber und Gasgemisch -- sowie den Eigenschaften und der Anordnung der Rohrleitungen und den damit verbundenen Kontaktflächen zwischen Gasgemisch und Betonabsorber abhängt. Da die Menge der nutzbaren Energie von einer möglichst großen wärmeaustauschenden Oberfläche abhängt, sollen Rohre mit vergleichsweise geringen Innendurchmessern von 8 bis 16 mm, aber großen, von der zu dimensionierenden Leistung bestimmten Rohrlängen eingebracht werden. Aus konstruktiven Gründen müssen diese Rohrlängen auf einzelne Kreise von 20 bis 80 m Länge aufgeteilt werden. Diese Kreise werden dann parallel geschaltet; Vorläufe werden in einem diesen zugeordneten, an sich bekannten Verteiler, in den das Gaseinspritzventil/der Mischkopf des Wärmepumpensystems eingelassen ist, zusammengefaßt. Die Rückläufe münden wiederum in einem an sich bekannten Verteiler. Der Vorlaufverteiler und der Rücklaufverteiler werden an den Vor- und den Rücklauf des Wärmepumpenkreislaufes angeschlossen.

Die Rohrleitungen werden mäanderförmig in das Betonelement eingebracht, bei dickeren Elementen in mehreren Lagen, üblicherweise ergibt sich eine Lage pro 5 bis 15 cm Wandstärke des Betonabsorbers.

Die Abstände zwischen den Rohrschlangen im Mäander betragen 25 bis 150 mm, geringere Abstände erhöhen die Leistungsfähigkeit, größere Abstände reduzieren die Kosten. Der gewählte Abstand wird von der erforderlichen Leistung und dem Kosten/Nutzen-Verhältnis bestimmt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1,2:: Seitenansichten eines säulenartigen Bauwerkes mit von einem Sockelelement vertikal aufragenden Platten;
- Fig. 3:: einen vergrößerten Teilgrundriß des Bauwerks in zwei Ausführungen;
- Fig. 4:: eine Draufsicht auf ein Sockelelement mit Leitungsschema;
- Fig. 5:: die Seitenansicht einer Platte;
- Fig. 6:: die Seitenansicht gemäß Fig. 5 mit einem Rohrschlangensystem;
- Fig. 7:: eine vergrößerte Stirnansicht der Platte;
- Fig. 8:: eine Schrägsicht auf eine weitere Ausführungsform des Bauwerks.
- Fig. 9:: eine Skizze zum Prinzip der Direktverdampfung im Bauwerk;
- Fig. 10:: eine Skizze zur Wärmeaufnahme über einen Solekreis.

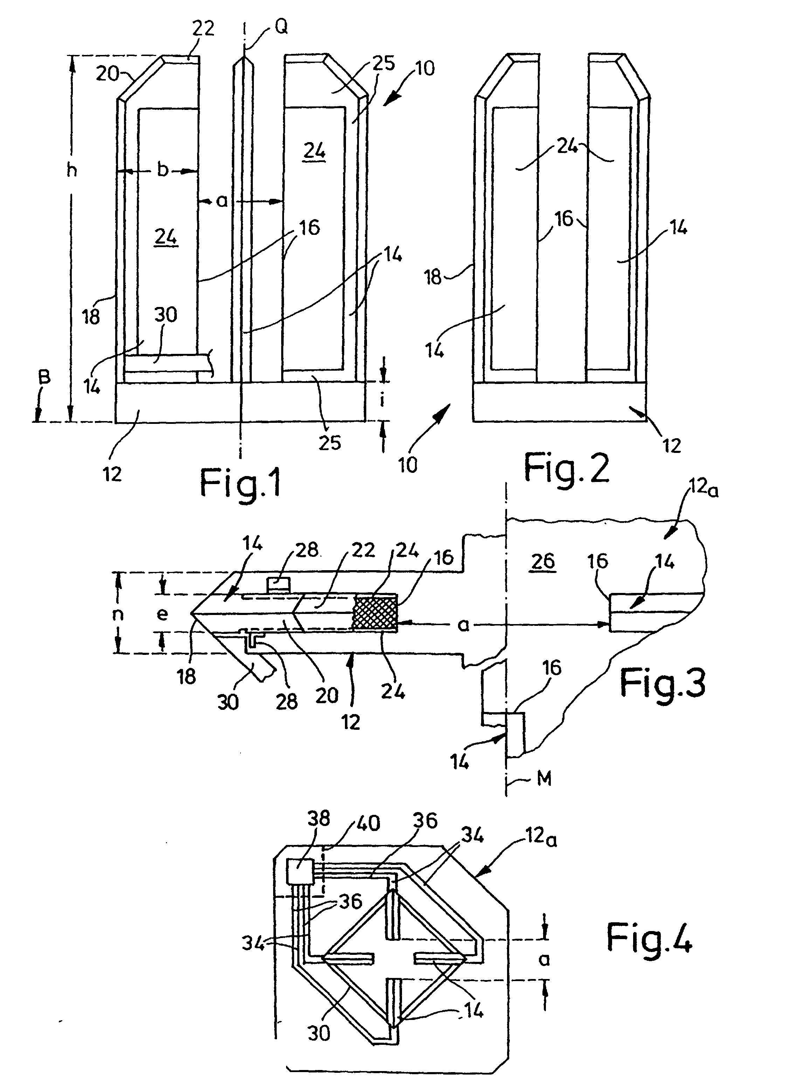

Ein säulenartiges Bauwerk 10 weist gemäß Fig. 1,2 vier von einem Sockelelement 12 aufragende Platten 14 auf, von denen jeweils zwei -- beidseits einer Vertikalachse Q --miteinander fluchten. Deren einander zugekehrte Innenkanten 16 stehen zueinander in einem Abstand a hier etwa 80 cm. Die Gesamthöhe h des Bauwerks 10 mißt beispielsweise zwischen 350 und 400 cm, damit diese Bauwerkseinheit 10 insgesamt auf einem -- nicht dargestellten -- Tieflader transportiert werden kann.

Jede der Platten 14 einer Breite b von etwa 100 cm sowie einer Dicke e zwischen 14 und 25 cm, aus Transportgewichtsgründen bevorzugt von etwa 15 cm, ist an einer Außenkante 18 beidseits angefast -- d. h. diese Außenkante 18 ist querschnittlich wie eine Pfeilspitze gestaltet -- und geht nach oben hin in ein gleich gestaltetes geneigtes Eckstück 20 über, das an eine Firstkante 22 anschließt.

In der Platte 14 ist eine rechteckige Vertiefungsfläche 24 vorgesehen, die dreiseitig von einem aus der Platte 14 herausgeformten Rahmen 25 umgeben ist sowie an der Innenkante 16 endet; die Vertiefungsfläche 24 kann unterschiedliche Strukturoberflächen aufnehmen.

Fig. 3 verdeutlicht, daß das Sockelelement 12 der Höhe i von hier etwa 30 cm in Draufsicht kreuzförmig ist (linke Figurenhälfte) oder von einer Sockelplatte 12ₐ dargestellt wird, auf der die Platten 14 festliegen; die Oberfläche 26 dieser Sockelplatte 12ₐ ist rechts einer Mittellinie M zu erkennen. Angedeutet ist auch, daß die vertikalen Platten 14 mittels Winkellaschen 28 an das Sockelelement 12,12ₐ und/oder an -- eine zusätzliche Stabilisierungshilfe darstellende -- seitliche Sockelstreifen 30 angeschlossen sein können - ein solcher ist zudem in Fig. 1 angedeutet.

In Fig. 3, unten, ist noch skizziert, daß die Breite n des kreuzförmigen Sockelelements 12 der Dicke e der vertikalen Platte 14 im engsten Falle etwa entsprechen kann, üblicherweise jedoch etwas größer bemessen ist.

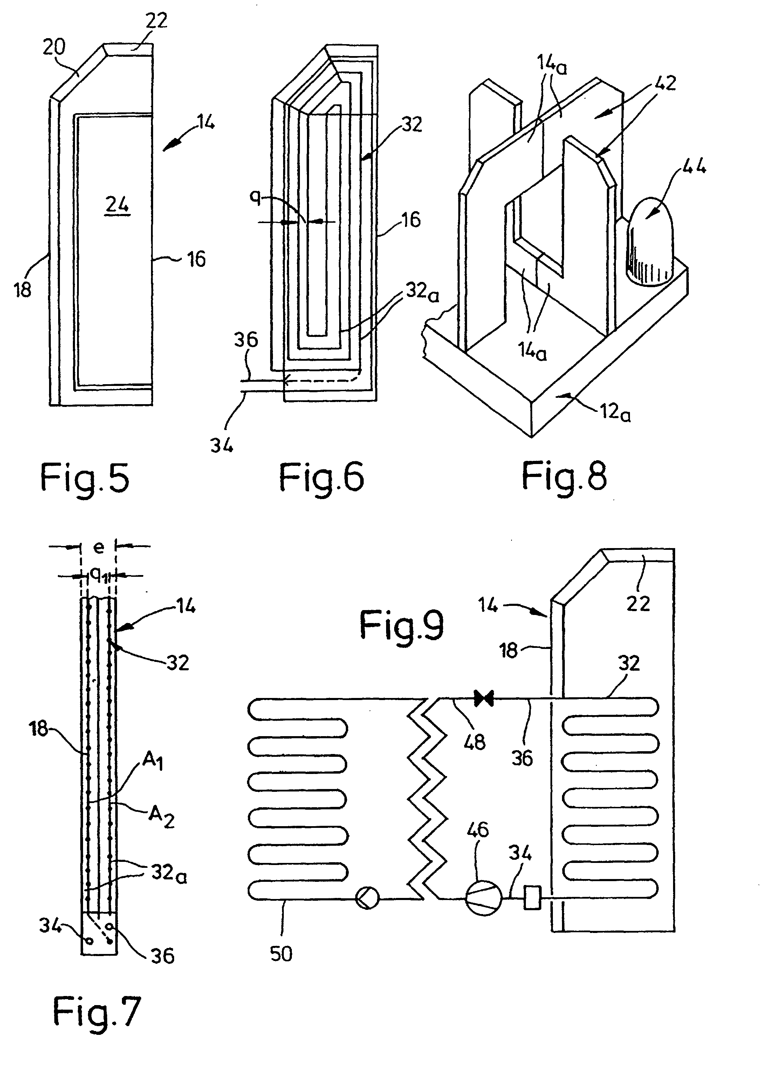

In den Beton der Platte 14 ist ein Absorberkreislauf aus einer Rohrschlange 32 eingebettet, der sich von einem Eingang 34 zu einem Ausgang 36 erstreckt. Der Abstand q der parallelen Rohrabschnitte 32ₐ der Rohrschlange 32 voneinander beträgt etwa 10 cm, zudem verläuft gemäß Fig. 7 die Rohrschlange 32 in zwei parallelen Ebenen A₁,A₂, deren Abstand mit q₁ bezeichnet ist.

In Fig. 4 ist in einer etwas vergrößert angedeuteten Sockelplatte 12ₐ der Flüssigkeitskreislauf 32 mit einem Verteiler 38 zu erkennen, an dem die einzelnen Kreise zuleitungs- und fortleitungsseitig zusammengefaßt sind und auf dem eine Wärmepumpe vorgesehen ist - diese ist bei 40 lediglich angedeutet.

In Fig. 8 sind jeweils zwei L-förmige Platten 14ₐ zu einem U-förmigen Boden 42 verbunden; in einen nach oben offenen Bogen 42 ist rechtwinklig ein nach unten offener Bogen 42 eingesetzt. Die Ecken der Bogen 42 können gerundet oder gebrochen, zudem die Bogen 42 selbst auch einstückig ausgebildet sein.

Das Bauwerk 10 wird, wie gesagt, komplett transportiert und auf einer Erdbodenoberfläche B aufgesetzt, dies gegebenenfalls auf einfach vorzubereitenden Punktfundamenten. Die mitgelieferte Wärmepumpe 40 wird wärmeseitig an einer -nicht dargestellten -- Heizungsanlage eines Hauses od. dgl. angeschlossen. An den Verdampfer des Kreislaufes "Verdichter-Expansionsventil-Verdampfer-Verflüssiger" ist der Wärmetauscher auf der kalten Seite angeordnet.

In Fig. 8 ist bei 44 eine Flüssiggasheizung angebracht. Der Kältemittelkreislauf der Wärmepumpe 40 wird mit Flüssiggas wie CH₃-CH₂-CH₃ betrieben. Nicht dargestellt ist eine monoenergetische Ausgestaltung mit einem elektrischen Heizstab statt jener Flüssiggasheizung.

Am Bauwerk 10 ist eine Direktverdampfung vorgesehen; gemäß Fig. 9 erfolgt die Wärmeaufnahme über eine Kältemittelverdampfung im Massivabsorber bzw. den Platten 14, deren -- einen Verdichter 46 enthaltendem Kältemittelkreis 48 -- ein Heizwasserkreis 50 zugeordnet ist.

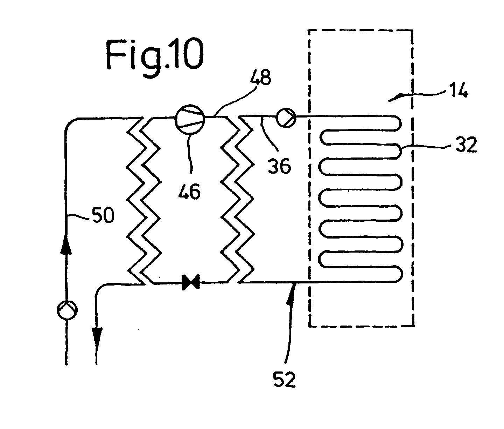

Fig. 10 zeigt die Wärmeaufnahme über einen Solekreis 52 im Massivabsorber 14 und die Verdampfung des Kältemittels in der Wärmepumpe 40. Nicht erkennbar ist, daß an dem Bauwerk 10 sowohl die im Solekreislauf 52 vorgesehene Soleumwälzpumpe als auch ein Soleausdehnungsgefäß zusammen mit dem gefüllten Solekreis fertig montiert sind und mit dem -- die völlig installierte Wärmepumpe 40 enthaltenden -- Bauwerk 10 zum Aufstellort transportiert werden können, wo dank dieser Vorinstallation beispielsweise im Keller eines zu heizenden Gebäudes nur noch der Warmwasserkreislauf durch einen Heizungsmonteur an eine dort vorgesehene Regelungsanlage anzuschließen ist.

Nicht dargestellt ist eine Ausführung, bei der die Wärmepumpe 40 in gewissem Abstand zum Bauwerk 10 installiert ist. Ihre Anschlußkreise 34,36 sind werksseitig für den vorgesehenen Abstand Wärmepumpe/Bauwerk vorbereitet und werden unter Zwischenfügung einer Absorbermatte im Erdreich verlegt.

## Patentansprüche

1. Bauwerk aus mehreren gesonderten, jeweils Rohrschlange/n (32) für ein Strömungsmittel als Energieträger enthaltenden plattenförmigen Betonfertigteilen (14), die radial an einer Mittelachse (Q) zu einer säulenartigen Konstruktion zusammengesetzt sind und zumindest teilweise in Abstand (a) zueinander verlaufen,
**dadurch gekennzeichnet,**
**daß** die Platten (14) miteinander eine transportable Fertigeinheit bilden.

2. Bauwerk nach Anspruch 1, **dadurch gekennzeichnet, daß** die Platten (14) auf einem Sockelelement (12,12ₐ) festgelegt sind und mit diesem die Transporteinheit bilden, wobei gegebenenfalls die Rohrschlange (32) der Platte doppellagig und an deren beiden Oberflächen vorgesehen ist.

3. Bauwerk nach Anspruch 2, **gekennzeichnet durch** ein Sockelelement (12) mit von einem Zentrum ausgehenden Kragarmen für die Platten (14) oder ein plattenartiges Sockelelement (12ₐ) als Tragorgan für die Platten (14) des Bauwerks (10).

4. Bauwerk nach Anspruch 2 oder 3, **dadurch gekennzeichnet, daß** innerhalb des Sockelelements (12,12ₐ) ein Verteiler (38) für die Zu- und Ableitungen (34,36) der Absorberkreisläufe oder Rohrschlangen (32) angeordnet ist.

5. Bauwerk nach einem der Ansprüche 1 bis 4, **dadurch gekennzeichnet, daß** an ihm Solekreise (52) vorgesehen und mit Sole gefüllt sind, wobei gegebenenfalls am Bauwerk (10) wenigstens eine Soleumwälzpumpe sowie zumindest ein Soleausdehnungsgefäß montiert sind.

6. Bauwerk nach einem der Ansprüche 1 bis 5, **dadurch gekennzeichnet, daß** es mit wenigstens einer installierten Wärmepumpe (40) versehen und diese an die Warmwasserseite eines Abnehmers anschließbar ausgebildet ist, wobei gegebenenfalls an diesem die Wärmepumpe fest montiert ist, insbesondere auf dem Sockelelement (12,12ₐ) des Bauwerkes (10).

7. Bauwerk nach einem der Ansprüche 1 bis 5, **dadurch gekennzeichnet, daß** es mit wenigstens einer installierten Wärmepumpe (40) versehen und diese an die Warmwasserseite eines Abnehmers anschließbar ausgebildet ist, wobei gegebenenfalls die zwischen ihm und der in Abstand vorgesehenen Wärmepumpe (40) verlaufenden Leitungen (34,36) mit einem Erdabsorber im Erdreich verlegbar ausgebildet sind.

8. Bauwerk nach Anspruch 7, **dadurch gekennzeichnet, daß** die Leitungen mit dem Erdabsorber in Reihe geschaltet sind und/oder der Erdabsorber eine Absorbermatte ist.

9. Bauwerk nach Anspruch 6 oder 7, **dadurch gekennzeichnet, daß** die Wärmepumpe (40) eine Gasabsorptionswärmepumpe mit integriertem Gaskessel ist oder der Kältemittelkreislauf der Wärmepumpe (40) Propan enthält.

10. Bauwerk nach wenigstens einem der Ansprüche 1 bis 9, **dadurch gekennzeichnet, daß** das Bauwerk wenigstens eine Heizeinrichtung enthält, wobei gegebenenfalls die Heizeinrichtung (40) eine Flüssiggasheizeinrichtung ist.

11. Bauwerk nach wenigstens einem der Ansprüche 1 bis 9, **dadurch gekennzeichnet, daß** das Bauwerk wenigstens eine Heizeinrichtung enthält, wobei gegebenenfalls die Heizeinrichtung (40) elektrisch betrieben, bevorzugt wenigstens ein Heizstab, ist.

12. Bauwerk nach wenigstens einem der Ansprüche 1 bis 11, **dadurch gekennzeichnet, daß** die Absorberkreisläufe oder Rohrschlangen (32) zur Direktverdampfung ausgebildet sind.

13. Bauwerk nach Anspruch 9 oder 12, **gekennzeichnet durch** eine Wärmepumpe (40), deren Strömungsmittel in den Rohrschlangen (32) der Platten (14) **durch** absorbierte Umweltenergie verdampfbar ausgebildet ist, insbesondere **durch** ein Gas oder Gasgemisch als Strömungsmedium.

14. Bauwerk nach wenigstens einem der Ansprüche 1 bis 13, **dadurch gekennzeichnet, daß** zwischen dem in ihm oben liegenden Eintritt und in dem unten liegenden Austritt der Rohrschlangen (32) ein Strömungsweg definiert ist, der auf seiner ganzen Länge ohne Neigungswechsel abfällt, wobei die Rohrschlangen bevorzugt mit Abständen zwischen den Rohren von 25 bis 150 mm, insbesondere 50 bis 150 mm, aus linearen Rohrstücken bestehen, die zueinander parallel verlaufen und miteinander durch Krümmer verbunden sind.

15. Bauwerk nach einem der Ansprüche 1 bis 14, **dadurch gekennzeichnet, daß** die Rohrschlangen (32) aus Kupferrohren oder Rohren aus einer Kupferlegierung bestehen, die mit einem synthetischen Material umschlossen sind, oder aus einem synthetischen Material, das innen kupferbeschichtet oder mit einer Beschichtung aus einer Kupferlegierung belegt ist, wobei die Kupferschicht 1 bis 2 mm dick bzw. das synthetische Material etwa 1 mm dick ist und/oder der Rohrdurchmesser gegebenenfalls 8 bis 16 mm mißt.

16. Bauwerk nach Anspruch 15, **dadurch gekennzeichnet, daß** die Rohrschlangen aus Rohrkreisen von 20 bis 80 m Länge bestehen, wobei die Längenunterschiede gegebenenfalls nicht mehr als 10 % betragen.

## Claims

1. Structure consisting of several separate slab-like precast concrete parts (14) which in each case contain pipe coil(s) (32) for a flow medium as an energy carrier and which are assembled radially on a centre axis (Q) to form a column-like construction and run at least partially at a distance (a) from each other, **characterised in that** the slabs (14) form with each other a transportable precast unit.

2. Structure according to claim 1, **characterised in that** the slabs (14) are fixed to a base element (12, 12ₐ) and with the latter form the transport unit, wherein if occasion arises the pipe coil (32) of the slab is double-layered and provided on both surfaces thereof.

3. Structure according to claim 2, **characterised by** a base element (12) with cantilevers extending from a centre for the slabs (14) or a slab-like base element (12ₐ) as a supporting member for the slabs (14) of the structure (10).

4. Structure according to claim 2 or 3, **characterised in that** within the base element (12, 12ₐ) is arranged a distributor (38) for the inlet and outlet pipes (34, 36) of the absorber circuits or pipe coils (32).

5. Structure according to any of claims 1 to 4, **characterised in that** brine circuits (52) are provided on it and filled with brine, wherein if occasion arises on the structure (10) are mounted at least one brine circulating pump as well as at least one brine expansion vessel.

6. Structure according to any of claims 1 to 5, **characterised in that** it is provided with at least one installed heat pump (40) and the latter is designed so as to be capable of being connected to the hot water side of a receiver, wherein if occasion arises the heat pump is permanently mounted on the latter, in particular on the base element (12, 12ₐ) of the structure (10).

7. Structure according to any of claims 1 to 5, **characterised in that** it is provided with at least one installed heat pump (40) and the latter is designed so as to be capable of being connected to the hot water side of a receiver, wherein if occasion arises the pipes (34, 36) running between it and the heat pump (40), which is provided at a distance, are designed so as to be capable of being laid in the ground with a ground absorber.

8. Structure according to claim 7, **characterised in that** the pipes are connected in series with the ground absorber and/or the ground absorber is an absorber mat.

9. Structure according to claim 6 or 7, **characterised in that** the heat pump (40) is a gas absorption heat pump with integrated gas boiler or the coolant circuit of the heat pump (40) contains propane.

10. Structure according to one or more of claims 1 to 9, **characterised in that** the structure contains at least one heating device, wherein if occasion arises the heating device (40) is a liquid gas heating device.

11. Structure according to one or more of claims 1 to 9, **characterised in that** the structure contains at least one heating device, wherein if occasion arises the heating device (40) is electrically operated, preferably at least one heating element.

12. Structure according to one or more of claims 1 to 11, **characterised in that** the absorber circuits or pipe coils (32) are designed for direct evaporation.

13. Structure according to claim 9 or 12, **characterised by** a heat pump (40) whose flow medium in the pipe coils (32) of the slabs (14) is designed so as to be capable of evaporation by absorbed ambient energy, in particular by a gas or gas mixture as the flow medium.

14. Structure according to one or more of claims 1 to 13, **characterised in that** between the entrance of the pipe coils (32), which is located at the top in it, and the exit, which is located at the bottom, is defined a flow path which slopes down without any change in inclination over its whole length, wherein the pipe coils preferably with distances between the pipes of 25 to 150 mm, in particular 50 to 150 mm, consist of linear pipe sections which run parallel to each other and are connected to each other by elbows.

15. Structure according to any of claims 1 to 14, **characterised in that** the pipe coils (32) consist of copper pipes or pipes made of a copper alloy, which are surrounded with a synthetic material, or consist of a synthetic material which is copper-coated on the inside or covered with a copper alloy coating, wherein the copper layer is 1 to 2 mm thick or the synthetic material is about 1 mm thick and/or the pipe diameter if occasion arises measures 8 to 16 mm.

16. Structure according to claim 15, **characterised in that** the pipe coils consist of pipe circuits 20 to 80 m long, wherein the differences in length if occasion arises are not more than 10%.

## Revendications

1. Structure constituée de plusieurs éléments préfabriqués séparés en béton (14), en forme de plaque, contenant chacun un ou des serpentin(s) (32) pour un fluide transportant de l'énergie, ces éléments étant assemblés selon un axe médian (Q) en une construction du genre colonne, et placés au moins partiellement à distance
(a) les uns des autres,
**caractérisée en ce que**, les plaques (14) forment ensemble une unité préfabriquée transportable.

2. Structure selon la revendication 1, **caractérisée en ce que** les plaques (14) sont fixées sur un élément de socle (12, 12ₐ) et forment avec celui-ci l'unité transportable, et **en ce que** le cas échéant, le serpentin (32) de la plaque est prévu à double couche et sur les deux faces de la plaque.

3. Structure selon la revendication 2, **caractérisée par** un élément de socle (12) muni de bras en porte-à-faux partant d'un centre pour les plaques (14) ou par un élément de socle (12ₐ) du genre plaque pour servir d'organe de support pour les plaques (14) de la structure (10).

4. Structure selon la revendication 2 ou 3, **caractérisée en ce qu'**à l'intérieur de l'élément de socle (12, 12ₐ) est disposée un répartiteur (38) pour les conduites d'allers et de retour (34, 36) des circuits d'absorbeurs ou des serpentins tubulaires (32).

5. Structure selon l'une des revendications 1 à 4, **caractérisée en ce que** des circuits d'eau salée(52) sont prévus sur la structure et sont remplis d'eau salée, et **en ce que** le cas échéant, sont montés sur la structure (10) au moins une bombe de circulation d'eau salée ainsi qu'au moins un récipient d'expansion d'eau salée.

6. Structure selon l'une des revendications 1 à 5, **caractérisée en ce qu'**elle est munie d'au moins une pompe à chaleur (40) installée et **en ce que** celle-ci est réalisé en étant susceptible d'être raccordée du côté de l'eau chaude à une utilisation, la pompe à chaleur étant, le cas échéant, montée fixe sur la structure, en particulier sur l'élément de socle (12, 12ₐ) de la structure (10).

7. Structure selon l'une des revendications 1 à 5, **caractérisée en ce qu'**elle est munie d'au moins une pompe à chaleur (40) installée et **en ce que** celle-ci est réalisée en étant susceptible d'être raccordée du côté de l'eau chaude à une utilisation, et **en ce que** le cas échéant, les conduites (34, 36) courant entre l'utilisation et la pompe à chaleur (40) prévue à distance, sont réalisées en étant susceptibles d'être disposés dans le sol avec un absorbeur de la chaleur du sol.

8. Structure selon la revendication 7, **caractérisée en ce que** les conduites sont branchées en série avec l'absorbeur de la chaleur du sol, et où l'absorbeur de la chaleur du sol est une natte absorbante.

9. Structure selon la revendication 6 ou 7, **caractérisée en ce que** la pompe à chaleur (40) est une pompe à chaleur à absorption de gaz à chaudière à gaz intégrée ou le circuit de réfrigérante de la pompe à chaleur (40) contient du propane.

10. Structure selon au moins l'une des revendications 1 à 9, **caractérisée en ce que** la structure contient au moins un organe de chauffage, et **en ce que** le cas échéant, l'organe de chauffage (40) est un organe de chauffage à gaz liquéfié.

11. Structure selon au moins l'une des revendications 1 à 9, **caractérisée en ce que** la structure contient au moins un organe de chauffage, et **en ce que** le cas échéant, l'organe de chauffage (40) est électrique, de préférence constitué par au moins une barre de chauffage.

12. Structure selon au moins l'une des revendications 1 à 11, **caractérisée en ce que** le circuit de l'absorbeur où les serpentins (32) sont réalisés pour l'évaporation directe.

13. Structure selon la revendication 9 ou 12, **caractérisée par** une pompe à chaleur (40), dont le fluide dans les serpentins tubulaires (32) des plaques (14) est susceptible d'être vaporisé par l'énergie de l'environnement absorbée, en particulier grâce à l'utilisation d'un gaz ou d'un mélange de gaz.

14. Structure selon au moins l'une des revendications 1 à 13, **caractérisée en ce qu'**entre l'entrée des serpentins tubulaires (32) située en haut de la structure et la sortie des serpentins tubulaires situés en bas, est défini un circuit d'écoulement qui descend sur toute sa longueur sans changement de pente, et **en ce que** les serpentins tubulaires se composent de parties linéaires de tube, de préférence avec des distances de 25 à 150 mm, en particulier de 50 à 150 mm entre les tubes et **en ce que** ces parties tubulaires courent parallèlement les unes aux autres et sont reliées les unes aux autres par des parties courbes.

15. Structure selon l'une des revendications 1 à 14, **caractérisée en ce que** les serpentins tubulaires (32) se composent de tubes de cuivre ou de tubes en un alliage de cuivre, qui sont recouverts d'une matière synthétique ou bien se composent d'une matière synthétique qui, à l'intérieur, est revêtue de cuivre ou bien est garnie d'un revêtement en un alliage de cuivre, et **en ce que** la couche de cuivre présente une épaisseur de 1 à 2 mm où la matière synthétique présente une épaisseur d'environ 1 mm et/où le diamètre du tube mesure le cas échéant de 8 à 16 mm.

16. Structure selon la revendication 15, **caractérisée en ce que** les serpentins se composent de circuits tubulaires de 20 à 80 m de longueur, la différence de longueur ne dépassant pas, le cas échéant, 10%.
